(19) Europäisches Patentamt
European Patent Office
Office européen des brevets

(11) **EP 4 660 235 A1**

(12) **EUROPEAN PATENT APPLICATION**
published in accordance with Art. 153(4) EPC

(43) Date of publication:
**10.12.2025 Bulletin 2025/50**

(21) Application number: **24780496.6**

(22) Date of filing: **27.03.2024**

(51) International Patent Classification (IPC):
$C08L\ 21/00^{(2006.01)}$   $B60C\ 1/00^{(2006.01)}$
$C08K\ 3/36^{(2006.01)}$   $C08K\ 5/053^{(2006.01)}$
$C08K\ 5/548^{(2006.01)}$   $C08L\ 9/00^{(2006.01)}$

(52) Cooperative Patent Classification (CPC):
**B60C 1/00; C08K 3/36; C08K 5/053; C08K 5/548;
C08L 9/00; C08L 21/00;** Y02T 10/86

(86) International application number:
**PCT/JP2024/012328**

(87) International publication number:
**WO 2024/204394 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058362**

(71) Applicant: **TOKUYAMA CORPORATION
Yamaguchi 745-8648 (JP)**

(72) Inventor: **NAKAMURA Masahiro
Shunan-shi, Yamaguchi 745-8648 (JP)**

(74) Representative: **Canzler & Bergmeier
Patentanwälte
Partnerschaft mbB
Despag-Straße 6
85055 Ingolstadt (DE)**

(54) **RUBBER COMPOSITION FOR TIRE AND RUBBER MATERIAL FOR TIRE**

(57) [Problem] To provide a rubber material for a tire having excellent fuel economy, wear resistance, and heat aging resistance, and a rubber composition for a tire suitable for manufacturing such a tire. [Solution] A rubber composition for a tire that contains a diene rubber, fumed silica having a surface silanol group density of $3/nm^2$ or less, a silane coupling agent, and a diol, in which the silane coupling agent content is from $0.50\ \mu mol/m^2$ to $3.9\ \mu mol/m^2$ relative to the BET specific surface area per gram of fumed silica, and the diol content is from $3\ \mu mol/m^2$ to $14\ \mu mol/m^2$ relative to the BET specific surface area per gram of fumed silica.

EP 4 660 235 A1

**Description**

TECHNICAL FIELD

The present disclosure relates to a tire rubber composition and a tire rubber material. Specifically, the present disclosure relates to the tire rubber material having particularly excellent fuel efficiency, wear resistance, and heat aging resistance; and also relates to a composition suitable for producing the tire rubber material.

BACKGROUND

For automobile tires, longer running lifespan is demanded in addition to good fuel efficiency. In order to achieve longer running lifespan, it is necessary to improve wear resistance and heat aging resistance of the tires. In order to improve wear resistance, carbon black as a reinforcing filler has been blended in the tire rubber composition.

On the other hand, silica produced by wet-process is known to be effective to improve fuel efficiency; however, when silica produced by wet-process is blended, wear resistance is lowered compared to the wear resistance in the case of blending carbon black. Therefore, when silica produced by wet-process is used as the reinforcing filler, the blended amount of carbon black is partially replaced by silica produced by wet-process; hence, the blended amount of carbon black decreases in relativity. Therefore, decrease in wear resistance of the tire rubber material is inevitable.

Patent Document 1 discloses a tire rubber material which includes an inorganic powder material in addition to a rubber component, carbon black and silica produced by wet-process as a filler in order to obtain the tire rubber material with excellent fuel efficiency and a wet grip property without lowering wear resistance.

Also, Patent Document 2 proposes to replace part of silica produced by wet-process with dry silica. Patent Document 2 discloses that dry silica improves fuel efficiency than silica produced by wet-process, and also dry silica can suppress a rubber hardness from lowering.

Also, Patent Document 3 discloses a tire rubber composition in which organic acid cobalt or cobalt complex, a phenol derivative, cyclic polysulfide, and polyvalent methylolmelamine are blended in predetermined amounts to improve the heat aging resistance property.

PRIOR DOCUMENTS

PATENT DOCUMENTS

Patent Document 1: JP Patent Application Laid Open No.2005-213353
Patent Document 2: JP Patent Application Laid Open No.2016-104840
Patent Document 3: JP Patent Application Laid Open No.2021-172733

SUMMARY

PROBLEMS TO BE SOLVED BY THE INVENTION

However, the tire rubber materials disclosed in Patent Document 1 to Patent Document 3 are not materials which can attain all of fuel efficiency, wear resistance, and heat aging resistance.

The present disclosure is achieved in view of such circumstances, and the object is to provide a tire rubber material having excellent fuel efficiency, wear resistance, and heat aging resistance; and also, to provide a tire rubber composition which is suitable for the production of the tire rubber material.

MEANS FOR SOLVING THE OBJECTS

The present inventor has found that the tire rubber material having excellent fuel efficiency, wear resistance, and heat aging resistance can be attained by blending fumed silica as a filler of the tire rubber composition and also by regulating amounts of predetermined additives depending on a specific surface area of fumed silica. Thereby, the present disclosure was achieved.

As discussed hereinabove, the embodiments of the present disclosure are as described in below.

[1] A tire rubber composition including:

a diene-based rubber, a fumed silica having a surface silanol group density of 3 groups/nm$^2$ or less, a silane coupling agent, and a diol;

wherein a content of the silane coupling agent is between 0.50 μmol/m$^2$ or more and 3.9 μmol/m$^2$ or less with respect to a BET specific surface area per 1 g of the fumed silica, and

a content of the diol is between 3 μmol/m$^2$ or more and 14 μmol/m$^2$ or less with respect to the BET specific surface area per 1 g of the fumed silica.

[2] The tire rubber composition according to [1], wherein the silane coupling agent is a sulfide-based silane coupling agent.

[3] The tire rubber composition according to [1] or [2] including 10 parts by mass or more and 70 parts by mass or less of the fumed silica with respect to 100 parts by mass of the diene-based rubber.

[4] The tire rubber composition according to any one of [1] to [3], wherein the BET specific surface area of the fumed silica is between 180 m$^2$/g or greater and 500 m$^2$/g or less.

[5] The tire rubber composition according to any one of [1] to [4], wherein the fumed silica is an untreated fumed silica.

[6] A tire rubber material made by vulcanizing the tire rubber composition according to any one of [1] to [5].

EFFECTS OF THE INVENTION

According to the present disclosure, a tire rubber material having excellent fuel efficiency, wear resistance, and heat aging resistance can be provided, and also a tire rubber composition suitable for producing thereof can be provided.

DETAILED DESCRIPTION

The present disclosure is explained in further details as described in below in the following order.

1. Tire rubber composition

    1.1. Diene-based rubber
    1.2. Fumed silica
    1.3. Silane coupling agent
    1.4. Diol
    1.5. Other components

2. Method for producing tire rubber composition
3. Tire rubber material

(1. Tire Rubber Composition)

The tire rubber composition according to the present disclosure includes a diene-based rubber, a fumed silica having a surface silanol group density of 3 groups/nm$^2$ or less, a silane coupling agent, and a diol.

(1.1. Diene-Based Rubber)

The diene-based rubber included in the tire rubber composition according to the present embodiment is preferably at least one selected from a natural rubber, an isoprene rubber, a butadiene rubber, a styrene-butadiene rubber, an acrylonitrile-butadiene rubber, a butyl rubber, an ethylenepropylene-diene rubber, and a chloroprene rubber. An amount of each of the above-mentioned rubbers constituting the diene-based rubber may be determined accordingly depending on the use and so on. Among these, preferably at least one is selected from a natural rubber and a styrene butadiene rubber.

Examples of the natural rubber include modified natural rubbers such as a natural rubber (NR), an epoxidized natural rubber (ENR), a hydrogenated natural rubber (HNR), a deproteinized natural rubber (DPNR), and a high purity natural rubber (HPNR). These natural rubbers may be used alone, or may be used by combining two or more natural rubbers. In the present embodiment, the natural rubber is preferably a native NR.

Examples of the styrene butadiene rubber (SBS) include a native solution polymerized SBR (S-SBR), a native emulsion polymerized SBR (E-SBR), and modified SBR thereof (modified S-SBR and modified E-SBR).

(1.2. Fumed Silica)

Fumed silica is silicon dioxide in a fine particle form produced by hydrolyzing silicon tetrachloride at high temperature in oxyhydrogen flame. Therefore, fumed silica is called dry silica and a method for producing this is different from a method for producing silica by wet-process such as a precipitation method and a gelation method. Regarding fumed silica, a primary particle size of a primary aggregate (minimal configurational unit) is smaller and a nitrogen absorption BET specific surface area is larger compared to those of silica produced by wet-process. Particles of fumed silica are aggregated and fused in a beaded-form, and forms a bulky agglomerate.

Also, fumed silica includes a siloxane bond, and in addition to the siloxane group, a silanol group which a hydroxy group is bonded to a silicon atom exists on the surface of fumed silica. Density of the silanol groups on the surface of fumed silica (a surface silanol group density) is lower than silica produced by wet-process due to different production methods. In the present embodiment, the surface silanol group density of fumed silica is 3 groups/$nm^2$ or less. By having the surface silanol group density within the above-mentioned range, while maintaining an amount of the silanol groups which are reaction sites between the below described silane coupling agent, it is possible to prevent decrease in wettability of a rubber which is caused when water adheres on the surface of silica; thereby, an enhanced fine dispersibility can be expected.

The surface silanol group density can be measured, for example, by methods such as Karl-Fischer method, an Igloss method, or an active hydrogen titration method using Grignard reagents.

Also, the silanol group tends to readily absorb water. Hence, a surface treatment to lower water absorption may be carried out by reacting the silanol group with other substances. The fumed silica which has been surface treated is called a surface treated fumed silica, and the fumed silica which has not been surface treated is called an untreated fumed silica.

In the present embodiment, the surface treated fumed silica and the untreated fumed silica are distinguished using a modified hydrophobic degree (M-value) shown in below. The modified hydrophobic degree (M-value) is a value obtained by a measurement method using the property that the surface treated fumed silica floats in water but completely suspends in methanol. As a method for measuring the M-value, a method described in examples of WO 2004/099075 can be used. When the surface treated fumed silica and the untreated fumed silica are represented using the M-value, the surface treated fumed silica has the M-value of 1 or greater and the untreated fumed silica has the M-value of less than 1.

In the present embodiment, from the point that the silane coupling agent has a bulky molecular structure and allows a sufficient amount to react on the silica surface, the untreated fumed silica is preferable as fumed silica, since it has a small amount of water which initiates self-condensation of the coupling agent, and also because the untreated fumed silica has a sufficient number of silanol groups.

A relatively high tap density is preferable from the point of industrial productivity. Specifically, the tap density of fumed silica is preferably 200 g/L or greater. As mentioned in above, fumed silica is bulky; thus, in the case of the tap density of 200 g/L or greater, fumed silica is preferably compressed.

Examples of a method for compressing fumed silica include a compression method using a ball mill, and a compression method using a vibration mill.

Note that, in the present embodiment, the tap density of fumed silica may be less than 200 g/L.

Also, in the present embodiment, a BET specific surface area of fumed silica is preferably 200 $m^2$/g or greater, 250 $m^2$/g or greater, or 300 $m^2$/g or greater. When the BET specific surface area of fumed silica is within the above-mentioned range, a sufficient number of the silanol groups in fumed silica can be secured which become reaction points with the diene-based rubber or the silane coupling agent.

Also, the upper limit of the BET specific surface area of fumed silica is not particularly limited, and for example, it is 500 $m^2$/g. When the BET specific surface area of fumed silica is too small, it becomes necessary to increase flame temperature during the production of fumed silica, which may lead to a loss of the fumed silica-specific structure, and the stable production of fumed silica tends to become difficult. When the BET specific surface area of fumed silica is too large, the stable production of fumed silica tends to become difficult.

A true density of fumed silica is preferably between 2.0 $g/cm^3$ or greater and 2.4 $g/cm^3$ or smaller, more preferably between 2.1 $g/cm^3$ or greater and 2.3 $g/cm^3$ or smaller, or even more preferably between 2.15 $g/cm^3$ or greater and 2.25 $g/cm^3$ or smaller. When the true density of fumed silica is within the above-mentioned range, silica tends to have higher elastic modulus , and the reinforcing effect tends to be easily exhibited in the rubber composition compared to the case of the true density of less than 2.0.

As one of the reasons of having the true density lower than 2.2 which is the generally known true density of amorphous silica, there may be pores (voids) inside the silica may be mentioned. According to Mackenzie, it is known that as the number of pores increases, the elastic modulus drops drastically according to an equation of $E = E0(1-P)^2$.

E0 = elastic modulus of solid material, P = pore volume, E = elastic modulus of material having pore volume P.

When a filler with a low elastic modulus is used, the reinforcing effect tends to decrease. When a true density is too high, a surface free energy of the silica particle surface tends to become high, and the difference in the surface free energies with respect to the rubber tends to become larger. Thus, dispersibility may be lowered. Also, in general, the larger a volume fraction of the filler, the higher the reinforcing property. Hence, if a material with extremely high density is filled, the elastic modulus improving effect may be difficult to attain.

As a method for making amorphous silica with high true density, methods such as synthesis under high pressure, and quenching from melting state are known. The true density of fumed silica can be measured for example by using a pycnometer method.

A blending amount of fumed silica is preferably between 10 parts by mass or more and 70 parts by mass or less with respect to 100 parts by mass of the diene-based rubber. When the blending amount of fumed silica is within the above-mentioned range, the tire rubber material having excellent fuel efficiency and wear resistance can be obtained. When the blending amount of fumed silica is too much, viscosity increases, and fumed silica can not be dispersed sufficiently in the fumed silica. Thus, a kneaded material with good quality tends to be difficult to obtain.

The blending amount of fumed silica is preferably 20 parts by mass or more, or more preferably 32 parts by mass or more with respect to 100 parts by mass of the diene-based rubber. The blending amount of fumed silica is preferably 60 parts by mass or less, or more preferably 50 parts by mass or less with respect to 100 parts by mass of the diene-based rubber.

(1.3. Silane Coupling Agent)

The diene-based rubber which is hydrophobic and fumed silica including the silanol group which is hydrophilic have low affinity; thus, it is difficult to mix these two while kneading. Thus, by blending the silane coupling agent, a crosslinking structure between the diene-based rubber and fumed silica is easily formed via the silane coupling agent. Thus, fumed silica tends to easily disperse uniformly in the diene-based rubber. As a result, it is possible to suppress a formation of a large fumed silica which did not disperse in the rubber, thereby, wear resistance of the tire rubber material can be improved.

As the silane coupling agent, a sulfur-containing silane coupling agent is preferable. Examples of the sulfur-containing silane coupling agent include bis-(3-triethoxysilylpropyl)tetrasulfide, bis(3-triethoxysilylpropyl)disulfide, 3-trimethoxysilylpropylbenzothiazole tetrasulfide, $\gamma$-mercaptopropyltriethoxysilane, 3-octanoylthiopropyltriethoxysilane, and mercapto-thiocarboxylate oligomers. In the present embodiment, from the point of heat resistance (heat aging property) of the tire rubber composition, a sulfide-based silane coupling agent is preferable.

In order to uniformly disperse fumed silica in the diene-base rubber, the silanol group of fumed silica needs to bond with the silane coupling agent to increase the affinity with the diene-based rubber which is hydrophobic. Therefore, it is necessary to blend the silane coupling agent in an amount which is just enough to react with the silanol groups. The surface silanol group density corresponds to the BET specific surface area per 1 g of fumed silica; thus, the blending amount of the silane coupling agent may be determined in accordance with the BET specific surface area per 1 g of fumed silica.

Therefore, from the point of enhancing the dispersibility of fumed silica, the blending amount of the silane coupling agent (the amount of the silane coupling agent in the tire rubber composition) is between 0.50 $\mu$mol/m$^2$ or more and 3.9 $\mu$mol/m$^2$ or less with respect to the BET specific surface area per 1 g of fumed silica.

Said blending amount is preferably 0.7 $\mu$mol/m$^2$ or more. Said blending amount is also preferably 2.0 $\mu$mol/m$^2$ or less, and more preferably 1.5 $\mu$mol/m$^2$ or less.

(1.4. Diol)

Diol is a divalent alcohol, and it is a hydrocarbon containing two hydroxy groups. By blending diol, A hardness of the tire rubber material increases even though the Mooney viscosity of the tire rubber composition decreases; thus, the blending amount of fumed silica can be reduced. As a result, fuel efficiency and wear resistance of the tire rubber material are improved. Further, by blending diol together with the above-mentioned silane coupling agent, the tire rubber material with good heat aging resistance can be obtained. Note that, such effect tends to be difficult to attain when monovalent alcohol and trivalent or higher alcohol are used.

In the present embodiment, preferable examples of diol include propylene glycol, 1,3-propanediol, dipropylene glycol, diethylene glycol, and polyethylene glycol having a polymerization degree of approximately 200 to 1000. Among them, propylene glycol, 1,3-propanediol, dipropylene glycol, diethylene glycol, and polyethylene glycols having a polymerization degree of 300 to 500 are more preferable.

Also, as similar to the silane coupling agent, the effect obtained by blending diol may be determined according to the surface silanol group density. Therefore, the blending amount of diol (the amount of diol in the tire rubber composition) is between 3 $\mu$mol/m$^2$ or more and 14 $\mu$mol/m$^2$ or less with respect to the BET specific surface area per 1 g of fumed silica.

The blending amount of diol is preferably 3.4 $\mu$mol/m$^2$ or more, and more preferably 6.8 $\mu$mol/m$^2$ or more. The blending amount of diol is also preferably 11 $\mu$mol/m$^2$ or less.

(1.5. Other Components)

In the present embodiment, in addition to the above-mentioned components (the diene-based rubber, fumed silica, the silane coupling agent, and diol), the tire rubber composition may include a component included in a rubber composition. Examples of such component include lubricants. By blending the lubricants, kneadability of each component is improved, and the tire rubber composition in which each component is sufficiently dispersed can be easily obtained.

Examples of the lubricants include stearic acid and process oils such as mineral oil and synthetic oil. Single lubricant may be used, or two or more lubricants may be used together. Examples of the process oils include aroma oil, paraffin oil, and naphthenic oil. These may be used alone, or two or more may be used together.

A blending amount of the lubricant (the amount of the lubricant in the tire rubber composition) is not particularly limited as long as the effect of the present disclosure can be attained. For example, the blending amount of the lubricant is preferably between 2 parts by mass or more and 60 parts by mass or less, or more preferably between 4 parts by mass or more and 50 parts by mass or less with respect to 100 parts by mass of the diene-based rubber. Specifically, the blending amount of the lubricant may be determined based on the type of the diene-based rubber. For example, when the diene-based rubber is NR, the blending amount of the lubricant is relatively small, and when the diene-based rubber is SBR, the blending amount of the lubricant, which includes the amount of the lubricant included in SBR itself, is relatively large.

When the blending amount of the lubricant is too small, viscosity increases and kneadability decreases; hence, wear resistance of the obtained tire rubber material may not improve sufficiently. When the blending amount of the lubricant is too large, shearing cannot be done properly; thus, fumed silica may not disperse sufficiently in the diene-based rubber.

Further, the tire rubber composition may include a reinforcing filler other than hydrophilic fumed silica. Examples of the reinforcing filler include carbon black, silica produced by wet-process, clay, mica, talc, calcium carbonate, aluminum hydroxide, aluminum oxide, and titanium oxide. When the reinforcing filler is blended, an appropriate amount of a filler coupling agent can be blended as well. The blending amount of the reinforcing filler is not particularly limited as long as the effect of the present disclosure can be attained, and it may be a usual blending amount.

Further, the tire rubber composition may include various additives such as zinc oxide, antioxidants, plasticizers, processing aids, liquid polymers, and heat curable resins. The blending amount of these additives is not particularly limited as long as the effect of the present disclosure is attained, and the blending amount may be a usual amount.

(2. Method for Producing Tire rubber Composition)

The tire rubber composition according to the present embodiment is obtained by kneading the above-mentioned diene-based rubber, the above-mentioned fumed silica, the above-mentioned silane coupling agent, the above-mentioned diol, and other components which are added if needed.

In the present embodiment, a master batch obtained by kneading the predetermined components is produced, and then, the rest of the components may be added and kneaded with the master batch. Thereby, the tire rubber composition may be produced. Alternatively, all of the components may be kneaded together to form the tire rubber composition.

In the case of making the master batch, the above-mentioned diene-based rubber, the above-mentioned fumed silica, the above-mentioned silane coupling agent, the above-mentioned diol, and other components which are added if needed are preferably kneaded.

As a kneading machine for making the master batch, any known kneading machines such as a Banbury mixer and a kneader can be used.

After producing the master batch, by blending and kneading the other components with the master batch, the tire rubber composition can be obtained. For example, the master batch and the other components can be kneaded using any known kneading machines such as a Banbury mixer and a kneader.

In the case of producing the tire rubber composition by kneading all of the components, for example, the known kneading machines such as a Banbury mixer and a kneader can be used.

Kneading conditions may be set to conditions which allow each component to be sufficiently kneaded.

(3. Tire Rubber Material)

The tire rubber material according to the present embodiment is a material made by vulcanizing the above-mentioned tire rubber composition.

In the tire rubber composition, in order to improve dispersibility of fumed silica, by setting the amount of the silane coupling agent according to the BET specific surface area of fumed silica, the silane coupling agent can sufficiently crosslink the diene-based rubber and fumed silica. As a result, fumed silica is uniformly kneaded in the tire rubber composition, and a large particle is suppressed from forming in the tire rubber material. Such effect is particularly prominent in the case of compressed fumed silica which is obtained by compressing fumed silica.

Further, diol is blended in the tire rubber material. By blending diol, A hardness of vulcanized rubber is increased, and the amount of blended filler can be reduced. As a result, fuel efficiency, wear resistance, and heat aging resistance can be improved.

Therefore, the tire rubber material according to the present embodiment attains excellent fuel efficiency, wear resistance, and heat aging resistance. Such tire rubber material can be suitably used for tires of passenger automobiles, and tires of trucks and buses. Also, it can be suitably used as configurational parts of tires. Among these, the tire rubber material can be suitably used as a tread, a base tread, a side wall, and a clinch.

The embodiment of the present disclosure is described hereinabove. However, the present disclosure is not limited to the above-mentioned embodiment, and various modifications are possible within the scope of the present disclosure.

EXAMPLES

In below, the present disclosure is described in further details using examples. Note that, the present disclosure is not limited to below described examples.

(Experiment 1)

(Preparation of Tire Rubber Composition)

In Experiment 1, a diene-based rubber was an SBR-based rubber. Below components (A) to (D) and (E-1) to (E-4) were placed in Labo Plastomill (BB600, manufactured by Toyo Seiki Seisaku-sho, Ltd.) having a capacity of 0.6 L so that the blending amounts of the components with respect to 100 parts by mass of the SBR-based rubber satisfied the amounts shown in Table 1. After placing the components in Labo Plastomill, the components were kneaded at a rotor rotational speed between 20 to 100 rpm so that a temperature of a kneaded material was at a temperature range of 140 to 150°C and after reaching the temperature, kneading was performed for 5 minutes. An air cylinder pressure was 0.5 MPa. After kneading was completed, a kneaded material was cooled to room temperature, and the kneaded material was taken out.

(A) Diene-based rubber

    (A-1) SBR (S-SBR E-581, manufactured by Asahi Kasei Corporation)
    (A-2) BR (BR01, manufactured by ENEOS Materials Corporation)

(B) Filler

    (B-1) Carbon black (Seast 6, manufactured by Tokai Carbon Co., Ltd., a nitrogen adsorption BET specific surface area: 120 $m^2/g$ and a tap density:400 g/L)
    (B-2) Silica produced by wet-process (Nipsil AQ, manufactured by Tosoh Silica Corporation, a nitrogen adsorption BET specific surface area: 200 $m^2/g$, a tap density:300 g/L, a silanol group density: 6 groups/$nm^2$, and a pycnometer true density: 2.1 $g/cm^3$)
    (B-3) Hydrophilic fumed silica (REOLOSIL QS-40, manufactured by Tokuyama Corporation, a nitrogen absorption BET specific surface area: 380 $m^2/g$, a tap density: 50 g/L, a silanol group density: 2.3 groups/$nm^2$, and a pycnometer true density: 2.2 $g/cm^3$)
    (B-4) Hydrophilic fumed silica (REOLOSIL QS-30C, manufactured by Tokuyama Corporation, a nitrogen absorption BET specific surface area: 300 $m^2/g$, a tap density: 70 g/L, a silanol group density: 2.1 groups/$nm^2$, and a pycnometer true density: 2.2 $g/cm^3$)
    (B-5) Highly compressed fumed silica having a tap density of 200 g/L which was made by compressing (B-4) using a ball mill (a silanol group density: 2.5 groups/$nm^2$, and a pycnometer true density: 2.2 $g/cm^3$)
    (B-6) Highly compressed fumed silica having a tap density of 250 g/L which was made by compressing (B-4) using a ball mill (a silanol group density: 3 groups/$nm^2$, and a pycnometer true density: 2.2 $g/cm^3$)
    (B-7) Hydrophilic fumed silica (REOLOSIL CP-102, manufactured by Tokuyama Corporation, a nitrogen absorption BET specific surface area: 200 $m^2/g$, a tap density: 100 g/L, a silanol group density: 1.8 groups/$nm^2$, and a pycnometer true density: 2.2 $g/cm^3$)

(B-8) Highly compressed fumed silica having a tap density of 250 g/L which was made by compressing (B-7) using a ball mill (a silanol group density: 3 groups/nm$^2$, and a pycnometer true density: 2.2 g/cm$^3$)

(C) Silane coupling agent

(C-1) Polysulfide-based coupling agent (Si69, manufactured by EVONIK)

(D) Diol

(D-1) 1,3-propane diol

(E) Other components

 (E-1) Lubricant (stearic acid, Bead Stearic Acid YR, manufactured by NOF Corporation)
 (E-2) Lubricant (Zinc oxide, Zinc oxide II, manufactured by SEIDO CHEMICAL INDUSTRY CO., LTD)
 (E-3) Antioxidant (Ozonone 6C, manufactured by Seiko Chemical Co., Ltd.)
 (E-4) Process oil (Aromax 3 (TDAE Oil), manufactured by FUJI KOSAN COMPANY, LTD)

Note that, a surface silanol group density of fumed silica was measured using a device which an evaporator for ores (ADP-512, manufactured by KYOTO ELECTRONICS MANUFACTURING CO., LTD.) was attached to a Karl Fischer Moisture Titrator (MKC-610, manufactured by KYOTO ELECTRONICS MANUFACTURING CO., LTD.). That is, temperature was raised to 130°C in a low-temperature furnace of the evaporator for ores, and a moisture amount equivalent to a silica loss on drying was measured by a coulometric titration using MKC-610. Then, a moisture amount equivalent to a loss on ignition was measured by a coulometric titration using a high-temperature furnace which was heated to 1000°C. A moisture amount equivalent to loss on ignition during the temperature change of 130°C to 1000°C was converted to a silanol group density using the below equation.

Silanol group density (number of groups/nm$^2$) = 668.9 $\times$ H$_2$O(%)/Specific surface area (m$^2$/g)

The kneaded material obtained in above and (E-5), (E-6), and (E-7) shown in below were added and mixed using a 6-inch roll tester, and thereby, the tire rubber composition was obtained. Note that, a blending amount of sulfur was determined by taking the sulfur amount contained in the other additive components into consideration.

(E) Other components

 (E-5) Sulfur (5% GOLDEN FLOWER OIL TREATED SULFUR POWDER, manufactured by Tsurumi Chemical Industry Co., ltd.)
 (E-6) Vulcanizing accelerator (N-cyclohexyl-2-benzothiazol sulfenamide (CBS), Sanseller-CM-G, manufatured by SANSHIN CHEMICAL INDUSTRY CO., LTD.)
 (E-7) Vulcanizing accelerator (1,3-diphenylguanidine (DPG), Sanseller-D-G, manufatured by SANSHIN CHEMICAL INDUSTRY CO., LTD.)

Note that, the compressed fumed silica of (B-5) was obtained by placing 200 g of fumed silica of (B-4) in a ball mill of a capacity of 7L (a ball size: φ32 mm, a ball filling rate:30%), and then, by pulverizing at a rotational speed of 300 rpm for about 5 hours at room temperature. Regarding the compressed fumed silica (B-6) and the compressed fumed silica (B-8), a pulverization time was changed to adjust the tap densities.

The nitrogen absorption BET specific surface areas of the fillers (B-1) to (B-8) were measured by a nitrogen absorption BET method using BELSOP MINI X manufacture by MicrotracBEL Corp. to each filler. Also, the tap densities of the fillers (B-1) to (B-8) were measured as described in below. First, a resin-made graduated cylinder of 1 L was placed on an electric scale and tared, then the cylinder was filled with about 1 L of the filler to record weight M (g). Then, the cylinder was manually tapped for 30 times from a height of about 10 cm, and a volume V (ml) was measured, thereby a tap density ρ was calculated.

Tap density $\rho = 1000 \times M/V$ (g/L)

[Table 1]

| | | | Example 1 | Example 2 | Example 3 | Example 4 | Example 5 | Example 6 | Example 7 | Example 8 | Example 9 | Comparative example 1 (Standard example 1) | Comparative example 2 | Comparative example 3 | Comparative example 4 |
|---|---|---|---|---|---|---|---|---|---|---|---|---|---|---|---|
| Tire rubber composition | Diene-based rubber | A-1 | 80 | 80 | 80 | 80 | 80 | 80 | 80 | 80 | 80 | 80 | 80 | 80 | 80 |
| | | A-2 | 20 | 20 | 20 | 20 | 20 | 20 | 20 | 20 | 20 | 20 | 20 | 20 | 20 |
| | Filler | B-1 | | | | | | | | | | 67 | | | |
| | | B-2 | | | | | | | | | | | 82 | | |
| | | B-3 | 52 | | | | | | | | | | | | |
| | | B-4 | | 51 | 43 | | | | | | | | | | |
| | | B-5 | | | | 51 | | | | | | | | | |
| | | B-6 | | | | | 51 | 53 | 56 | | | | | 53 | 71 |
| | | B-7 | | | | | | | | 52 | | | | | |
| | | B-8 | | | | | | | | | 52 | | | | |
| | Coupling agent (μmol/m²) | C-1 | 0.74 | 0.74 | 1.11 | 0.74 | 0.74 | 0.74 | 0.74 | 0.74 | 1.11 | 0 | 0.74 | 0.74 | 0.48 |
| | Diol (μmol/m²) | D-1 | 6.8 | 6.8 | 10.2 | 6.8 | 6.8 | 4.8 | 3.4 | 6.8 | 10.2 | 0 | 0 | 0 | 6.8 |
| | Other components | E-1 | 3 | 3 | 3 | 3 | 3 | 3 | 3 | 3 | 3 | 3 | 3 | 3 | 3 |
| | | E-2 | 2 | 2 | 2 | 2 | 2 | 2 | 2 | 2 | 2 | 2 | 2 | 2 | 2 |
| | | E-3 | 2 | 2 | 2 | 2 | 2 | 2 | 2 | 2 | 2 | 2 | 2 | 2 | 2 |
| | | E-4 | 23 | 23 | 23 | 23 | 23 | 23 | 23 | 23 | 23 | 23 | 23 | 23 | 23 |
| | | E-5 | 1.5 | 1.5 | 1.2 | 1.5 | 1.5 | 1.5 | 1.5 | 1.5 | 1.2 | 2.2 | 1.5 | 1.5 | 1.8 |
| | | E-6 | 1.8 | 1.8 | 1.8 | 1.8 | 1.8 | 1.8 | 1.8 | 1.8 | 1.8 | 1.8 | 1.8 | 1.8 | 1.8 |
| | | E-7 | 0.5 | 0.5 | 0.5 | 0.5 | 0.5 | 0.5 | 0.5 | 0.5 | 0.5 | 0.5 | 0.5 | 0.5 | 0.5 |
| Physical property of tire rubber composition | Mooney viscosity (ML4+1 100°C) | | 60 | 59 | 52 | 61 | 62 | 65 | 72 | 55 | 56 | 67 | 67 | 94 | 87 |

(continued)

| | | Example 1 | Example 2 | Example 3 | Example 4 | Example 5 | Example 6 | Example 7 | Example 8 | Example 9 | Comparative example 1 (Standard example 1) | Comparative example 2 | Comparative example 3 | Comparative example 4 |
|---|---|---|---|---|---|---|---|---|---|---|---|---|---|---|
| Tire rubber material | A hardness | 65 | 65 | 65 | 65 | 65 | 65 | 65 | 65 | 65 | 65 | 65 | 65 | 65 |
| | Rolling resistance index | 4.03 | 4.08 | 5.77 | 4.03 | 3.97 | 3.60 | 2.94 | 4.25 | 4.57 | 1.00 | 1.59 | 2.14 | 3.52 |
| | Wear index | 1.92 | 1.72 | 2.00 | 1.43 | 1.18 | 1.43 | 1.67 | 1.18 | 1.12 | 1.00 | 0.83 | 1.09 | 0.71 |
| | Strength index | 1.25 | 1.24 | 0.98 | 1.06 | 0.82 | 0.86 | 0.97 | 1.15 | 0.86 | 1.00 | 1.18 | 0.84 | 1.00 |
| | Heat resistance index | 1.00 | 1.04 | 1.21 | 1.04 | 1.05 | 1.03 | 1.02 | 1.08 | 1.00 | 0.90 | 0.88 | 0.90 | 0.85 |

A test piece of the obtained tire rubber composition was made to carry out the below-described evaluations. Using the obtained test piece, the below physical properties were evaluated.

(Processing property: Mooney viscosity)

Regarding the obtained test piece of the tire rubber composition, a Mooney viscosity at 100°C (ML1 + 4 100°C) was measured in accordance with JIS K6300-1 using a Mooney viscometer (VR-1132, manufactured by Ueshima Seisakusho Co., Ltd.). The lower the Mooney viscosity, the better the processing property of the tire rubber composition tends to be. Results are shown in Table 1.

(Preparation of Tire Rubber Material Test Piece)

Then, the obtained tire rubber composition was press-vulcanized for T90 + 1 minute obtained from the conditions of 160°C for 30 minutes in accordance with JIS K6300-2; thereby, the tire rubber material was obtained. A test piece for carrying out the below evaluations was made from the obtained tire rubber material. The below physical properties were evaluated using the obtained test piece.

(A Hardness)

Regarding the test piece of the obtained tire rubber material, hardness (Shore A hardness) was measured using a durometer in accordance with JIS K6253 Type A. Since the target A hardness is 65 for the tire rubber material, preferably, the A hardness of the test piece is also around 65. Results are shown in Table 1.

(Fuel Efficiency: tan $\delta$ at 60°C)

A measurement was conducted to the test piece of the obtained tire rubber material using a dynamic viscoelasticity tester (VR-7130, manufactured by Ueshima Seisakusho Co., Ltd.) under the conditions described in below in accordance with JIS K6394. Based on the measured values at 60°C, tan $\delta$ (60°C) was calculated.

Measurement temperature: 60°C
Static strain: 10%
Dynamic strain: $\pm 2\%$
Frequency: 10 Hz

The calculated tan $\delta$ (60°C) of Standard Example 1 (Comparative Example 1) was set to 1.0, and a rolling resistance index was calculated using an equation shown in below. The larger the index, the better the rolling resistance. The results are shown in Table 1.

(Rolling Resistance Index) = (tan $\delta$ (60°C) of Standard Example 1)/(tan $\delta$ (60°C) of Example)

(Wear Resistance: FPS Wear Amount)

For the test piece of the obtained tire rubber material, the FPS wear loss was measured using an FPS abrasion tester (Model AB-2012, manufactured by Ueshima Seisakusho Co., Ltd.) under the conditions of a temperature of 35°C, a load of 40 N, a slip ratio of 10%, and a test time of 2 minutes. A volume loss was calculated from the FPS wear amount, the loss amount of Standard example 1 (Comparative example 1) was set to 1.0, and a wear index was calculated using the below equation. The larger the index, the better the wear resistance. The results are shown in Table 1.

(Wear Index) = (Loss amount of Standard example 1)/(Loss amount of Example)

(Heat Aging Resistance)

The obtained tire rubber composition was vulcanized at 160°C for T90 + 1 minute using a mold with a thickness of 2 mm to obtain a vulcanized rubber sheet. The obtained vulcanized rubber sheet was punched into samples using a JIS No. 3 dumbbell die. The samples were heat aged in a Geer oven for 5 days (120 hours) set at a temperature of 80°C. Then, tensile strength at break was measured using a tensile tester in accordance with JIS K6251 together with a non-aged sample. A ratio between the tensile strength at break of the non-aged sample and the tensile strength at break of the aged sample was obtained, and used as an index of heat aging resistance. A heat resistance index was calculated using the below equation. When the heat resistance index was 1 or greater, it was considered to have excellent heat aging resistance, and when the heat resistance index was less than 1, it was considered that the tensile strength at break has decreased due to heat aging, hence, heat aging resistance was lowered. Results are shown in Table 1.

(Heat resistance index) = {(Tensile strength at break of sample after heat aging)/(Tensile strength at break of non-aged sample)}

Also, for samples prior to heat aging test, the tensile strength at break of Standard example 1 (Comparative example 1) prior to heat aging test was set to 1.00, and a strength index was calculated from the below equation. The larger the strength index, the better the strength. Results are shown in Table 1.

(Strength index) = (Tensile strength at break of Example)/(Tensile strength at break of Standard example 1)

According to Table 1, when the diene-based rubber is a SBR-based rubber, the tire rubber material, which the added amounts of the silane coupling agent and diol were within the above-mentioned range, exhibited high wear resistance than the tire rubber material produced by kneading carbon black and silica produced by wet-process. Also, at the same time, high heat aging resistance was confirmed.

(Experiment 2)

In Experiment 2, a NR-based rubber was used as the diene-based rubber. The below components (A) to (D) and (E-1) to (E-4) were placed in a pressure kneader of capacity of 0.5 L made by MORIYAMA so that blending amounts with respect to 100 parts by mass of the NR-based rubber satisfied the blending amounts shown in Table 2. The materials were placed one at a time, and kneaded for five minutes at a rotor rotational speed of 30 rpm after the kneaded material reached the temperature range between 140 to 150°C. A ram pressure during kneading was within a range of 0.4 to 0.5 MPa. After kneading was completed, the temperature of the kneaded material was cooled to room temperature, and thereby a kneaded product was obtained.

(A) Diene-based rubber

(A-3) Natural Rubber made in Vietnam: SVR

(B) Filler

(B-1) (Seast 6, manufactured by Tokai Carbon Co., Ltd., a nitrogen adsorption BET specific surface area: 120 $m^2$/g and a tap density:400 g/L)
(B-2) Silica produced by wet-process (Nipsil AQ, manufactured by Tosoh Silica Corporation, a nitrogen adsorption BET specific surface area: 200 $m^2$/g, a tap density:300 g/L, and a silanol group density: 6 groups/$nm^2$)
(B-4) Hydrophilic fumed silica (REOLOSIL QS-30C, manufactured by Tokuyama Corporation, a nitrogen absorption BET specific surface area: 300 $m^2$/g, and a tap density: 70 g/L)
(B-5) Highly compressed fumed silica having a tap density of 200 g/L which was made by compressing (B-4) using a ball mill
(B-6) Highly compressed fumed silica having a tap density of 250 g/L which was made by compressing (B-4) using a ball mill

(C) Silane coupling agent

(C-1) Polysulfide-based coupling agent (Si69, manufactured by EVONIK)

(D) Diol

(D-1) 1,3-propane diol

(E) Other components

(E-1) Lubricant (stearic acid, Bead Stearic Acid YR, manufactured by NOF Corporation)
(E-2) Lubricant (Zinc oxide, Zinc oxide II, manufactured by SEIDO CHEMICAL INDUSTRY CO., LTD)
(E-3) Antioxidant (Ozonone 6C, manufactured by Seiko Chemical Co., Ltd.)
(E-4) Process oil (Aromax 3 (TDAE Oil), manufactured by FUJI KOSAN COMPANY, LTD)

The below described (E-5) and (E-8) were added and mixed with the obtained kneaded product using a 6-inch roll tester, and thereby, the tire rubber composition was obtained.

(E) Other components

(E-5) Sulfur (5% GOLDEN FLOWER OIL TREATED SULFUR POWDER, manufactured by Tsurumi Chemical Industry Co., ltd.)
(E-8) Vulcanizing accelerator (N-(tert-butyl)-2-benzothiazol sulfenamide (TBBS), Sanseller-NS-G, manufatured by SANSHIN CHEMICAL INDUSTRY CO., LTD.)

[Table 2]

| | | | Example 10 | Example 11 | Example 12 | Comparative example 5 (Standard example 2) | Comparative example 6 |
|---|---|---|---|---|---|---|---|
| Tire rubber composition | Diene-based rubber | A-3 | 100 | 100 | 100 | 100 | 100 |
| | Filler | B-1 | | | | 45 | |
| | | B-2 | | | | | 45 |
| | | B-4 | 45 | | | | |
| | | B-5 | | 45 | | | |
| | | B-6 | | | 45 | | |
| | Coupling agent ($\mu$mol/m$^2$) | C-1 | 0.74 | 0.74 | 0.74 | 0 | 0.74 |
| | Diol ($\mu$mol/m$^2$) | D-1 | 6.8 | 6.8 | 6.8 | 0 | 6.8 |
| | Other components | E-1 | 3 | 3 | 3 | 3 | 3 |
| | | E-2 | 2 | 2 | 2 | 2 | 2 |
| | | E-3 | 2 | 2 | 2 | 2 | 2 |
| | | E-4 | 2 | 2 | 2 | 2 | 2 |
| | | E-5 | 1.75 | 1.75 | 1.75 | 2.42 | 1.75 |
| | | E-8 | 1.55 | 1.55 | 1.55 | 1.55 | 1.55 |
| Physical property of tire rubber composition | Mooney viscosity (ML4+1 100°C) | | 65 | 62 | 58 | 60 | 40 |

(continued)

| | | Example 10 | Example 11 | Example 12 | Comparative example 5 (Standard example 2) | Comparative example 6 |
|---|---|---|---|---|---|---|
| Tire rubber material | Strength index | 1.14 | 1.13 | 1.13 | 1.00 | 1.16 |
| | Heat resistance index | 1.10 | 1.06 | 1.02 | 0.85 | 0.90 |

A test piece of the obtained tire rubber composition was made to carry out the same evaluations as Experiment 1. Using the test piece, the physical property (Mooney viscosity) evaluated in Experiment 1 was evaluated. Results are shown in Table 2.

(Preparation of Tire Rubber Material)

Next, the obtained tire rubber composition was press-vulcanized for T90 + 1 minute obtained under the conditions of 150°C for 60 minutes in accordance with JIS K6300-2 to obtain a tire rubber material. A test piece was obtained from the obtained tire rubber material to carry out the same evaluations as in Experiment 1. Using the test piece, some of the physical properties evaluated in Experiment 1 were evaluated. Results are shown in Table 2. Note that, for a strength index, Standard example 2 (Comparative example 5) was used as a standard. Results are shown in Table 2.

According to Table 2, even in the case that NR was used as the diene-based rubber, the tire rubber material, which the silane coupling agent and diol were within the above-mentioned range, exhibited higher heat aging resistance than the tire rubber material produced by kneading carbon black and silica produced by wet-process.

**Claims**

1. A tire rubber composition comprising:

   a diene-based rubber, a fumed silica having a surface silanol group density of 3 groups/nm$^2$ or less, a silane coupling agent, and a diol;
   wherein a content of the silane coupling agent is between 0.50 $\mu$mol/m$^2$ or more and 3.9 $\mu$mol/m$^2$ or less with respect to a BET specific surface area per 1 g of the fumed silica, and
   a content of the diol is between 3 $\mu$mol/m$^2$ or more and 14 $\mu$mol/m$^2$ or less with respect to the BET specific surface area per 1 g of the fumed silica.

2. The tire rubber composition according to claim 1, wherein the silane coupling agent is a sulfide-based silane coupling agent.

3. The tire rubber composition according to claim 1 or 2 including 10 parts by mass or more and 70 parts by mass or less of the fumed silica with respect to 100 parts by mass of the diene-based rubber.

4. The tire rubber composition according to any one of claims 1 to 3, wherein the BET specific surface area of the fumed silica is between 180 m$^2$/g or greater and 500 m$^2$/g or less.

5. The tire rubber composition according to any one of claims 1 to 4, wherein the fumed silica is an untreated fumed silica.

6. A tire rubber material made by vulcanizing the tire rubber composition according to any one of claims 1 to 5.

## INTERNATIONAL SEARCH REPORT

| International application No. |
|---|
| **PCT/JP2024/012328** |

**A. CLASSIFICATION OF SUBJECT MATTER**

*C08L 21/00*(2006.01)i; *B60C 1/00*(2006.01)i; *C08K 3/36*(2006.01)i; *C08K 5/053*(2006.01)i; *C08K 5/548*(2006.01)i; *C08L 9/00*(2006.01)i

FI:  C08L21/00; C08K3/36; C08K5/548; C08K5/053; C08L9/00; B60C1/00 Z

According to International Patent Classification (IPC) or to both national classification and IPC

**B. FIELDS SEARCHED**

Minimum documentation searched (classification system followed by classification symbols)

C08L21/00; B60C1/00; C08K3/36; C08K5/053; C08K5/548; C08L9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-183061 A (THE YOKOHAMA RUBBER CO., LTD.) 22 October 2015 (2015-10-22) | 1-6 |
| A | JP 2012-144619 A (SUMITOMO RUBBER IND., LTD.) 02 August 2012 (2012-08-02) | 1-6 |
| A | JP 2019-157042 A (SUMITOMO RUBBER IND., LTD.) 19 September 2019 (2019-09-19) | 1-6 |
| A | WO 2016/009776 A1 (SUMITOMO RUBBER IND., LTD.) 21 January 2016 (2016-01-21) paragraph [0071] | 1-6 |
| P, X | WO 2023/054510 A1 (TOKUYAMA CORPORATION) 06 April 2023 (2023-04-06) claims, examples | 1-6 |

☐ Further documents are listed in the continuation of Box C.    ☑ See patent family annex.

| | |
|---|---|
| * Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012328**

| Patent document cited in search report | | | Publication date (day/month/year) | Patent family member(s) | Publication date (day/month/year) |
|---|---|---|---|---|---|
| JP | 2015-183061 | A | 22 October 2015 | (Family: none) | |
| JP | 2012-144619 | A | 02 August 2012 | (Family: none) | |
| JP | 2019-157042 | A | 19 September 2019 | (Family: none) | |
| WO | 2016/009776 | A1 | 21 January 2016 | (Family: none) | |
| WO | 2023/054510 | A1 | 06 April 2023 | TW 202330774 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005213353 A
- JP 2016104840 A
- JP 2021172733 A
- WO 2004099075 A